# EUROPÄISCHE PATENTANMELDUNG

(11) **EP 0 902 225 A1**
(43) Veröffentlichungstag der Anmeldung: **17.03.1999**
(21) Anmeldenummer: 98117429.5
(22) Anmeldetag: 15.09.1998
(51) Int. Cl.: F16L 5/08, H02G 3/22

(54) **Durchführungsvorrichtung**

(30) Priorität: 15.09.1997 DE 19740458
(71) Anmelder: Doyma GmbH & Co, 28876 Oyten (DE)
(72) Erfinder: Schilhart, Peter, 28327 Bremen (DE)
(74) Vertreter: Eisenführ, Speiser & Partner

(57) **Zusammenfassung**

Die vorliegende Erfindung betrifft eine Durchführungsvorrichtung zur Durchführung mindestens einer Leitung (7) durch einen in einer Wand, einer Sohlplatte (8) o. dgl. ausgebildeten Durchbruch, mit zwischen der Innenfläche des Durchbruchs und der Außenfläche der Leitung (7) plazierbaren Dichtmitteln (2, 3, 4) zum Abdichten an dem Durchbruch und der Leitung (7) und mit Spannmitteln (5, 5a) zum abdichtenden Verspannen der Dichtmittel (2, 3, 4), die sich auszeichnet durch ein axial von den Dichtmitteln (2, 3, 4) beabstandetes Stützelement (6) zum Stützen der mindestens einen Leitung (7). Ist die Durchführungsvorrichtung mit einem Futterrohr (1) ausgebildet, welches im montierten Zustand der Durchführungsvorrichtung (20) die Innenfläche des Durchbruchs zumindest teilweise auskleidet, wobei die Dichtmittel (2, 3, 4) eine erste und eine zweite Flanschplatte (2, 4) sowie einen zwischen den beiden Flanschplatten (2, 4) angeordneten Dichtkörper (3) aufweisen und die beiden Flanschplatten (2, 4) und der Dichtkörper (3) miteinander fluchtende Durchbrechungen zur Durchführung der mindestens einen Leitung (7) aufweisen, ist erfindungsgemäß vorgesehen, daß die erste Flanschplatte (2) oder die zweite Flanschplatte (4) an dem Futterrohr (1) gelagert ist. Die Erfindung betrifft ferner die Verwendung einer Durchführungsvorrichtung für mindestens eine Leitung zur Montage in einem mit zumindest abstandsweise gekrümmt oder schräg in einer Wand angeordneten Durchbruch.

## Beschreibung

Die Erfindung betrifft in einem ersten Aspekt eine Durchführungsvorrichtung zur Durchführung mindestens einer Leitung durch einen in einer Wand, einer Sohlplatte o. dgl. ausgebildeten Durchbruch, mit zwischen der Innenfläche des Durchbruchs und der Außenfläche der Leitung plazierbaren Dichtmitteln zum Abdichten an dem Durchbruch und der Leitung und mit Spannmitteln zum abdichtenden Verspannen der Dichtmittel.

Die Erfindung betrifft in einem zweiten Aspekt eine Durchführungsvorrichtung zur Durchführung mindestens einer Leitung durch einen in einer Wand, einer Sohlplatte o. dgl. ausgebildeten Durchbruch, mit zwischen der Innenfläche des Durchbruchs und der Außenfläche der Leitung plazierbaren Dichtmitteln zum Abdichten an dem Durchbruch und der Leitung und mit Spannmitteln zum abdichtenden Verspannen der Dichtmittel, mit einem Futterrohr, welches im montierten Zustand der Durchführungsvorrichtung die Innenfläche des Durchbruchs zumindest teilweise auskleidet, wobei die Dichtmittel eine erste und eine zweite Flanschplatte sowie einen zwischen den beiden Flanschplatten angeordneten Dichtkörper aufweisen und die beiden Flanschplatten und der Dichtkörper miteinander fluchtende Durchbrechungen zur Durchführung der mindestens einen Leitung aufweisen.

Derartige Durchführungsvorrichtungen sind bekannt und werden beim Bau oder der Renovierung von Gebäuden zur Durchführung von Versorgungsleitungen für Gas, Wasser, Strom etc. durch Durchbrüche eingesetzt, die in einer Sohlplatte eines Gebäudes, einer Wand, einer Decke o. dgl. ausgebildet sind. Insbesondere Durchführungsvorrichtungen für Gebäudeaußenwände und hierbei im speziellen durch Sohlplatten müssen hinreichend abdichten, um das Eindringen von Feuchtigkeit in das Mauerwerk und das Gebäudeinnere zu verhindern.

Speziell bei durchzuführenden Gasleitungen ist es notwendig, daß im Fall des Auftretens großer Zugkräfte - beispielsweise bei unbeabsichtigtem Herausreißen einer Gasleitung aus dem Erdreich durch einen Bagger - die Leitung oder eine angeschlossene Armatur nicht im Inneren eines Gebäudes undicht wird oder bricht, da das ausströmende Gas eine Explosion herbeiführen und/oder Menschen schädigen könnte. Es wird grundsätzlich zwischen Durchführungsvorrichtungen mit und ohne einem den Durchbruch auskleidenden Futterrohr unterschieden. Beide Arten sind - wie nachfolgend erläutert - bei den bekannten Durchführungsvorrichtungen in begrenztem Maße zur Aufnahme von Zugkräften in Axialrichtung geeignet.

Eine Durchführungsvorrichtung ohne Futterrohr ist aus dem deutschen Patent 38 28 693 bekannt, bei der die Dichtmittel einen elastischen Dichtkörper umfassen, welcher sandwichartig zwischen zwei Flanschplatten angeordnet ist. Die Flanschplatten sowie der Dichtkörper werden in den Durchbruch eingesetzt und mittels Gewindebolzen verschraubt, die den Dichtkörper sowie die beiden Flanschplatten durchsetzen. Hierzu werden auf die frei überstehenden Enden der Gewindebolzen Muttern aufgesetzt und festgezogen. Die resultierende axiale Verpressung führt zu einer radialen Aufweitung des Dichtkörpers, so daß sich der Dichtkörper abdichtend sowohl an die Wanddurchbrechung als auch an die durchgeführte Leitung anlegt. Nachteilig bei dieser bekannten Durchführungsvorrichtung ist, daß die radiale Anpressung des elastischen Dichtkörpers an den Durchbruch nur eine Aufnahme einer kleinen axialen Kraft erlaubt.

Eine Durchführungsvorrichtung mit einem Futterrohr ist in dem deutschen Gebrauchsmuster 19 75 755 beschrieben, bei der an den stirnseitigen Endbereichen des Futterrohres jeweils Dichtmittel vorgesehen sind, die ebenfalls mittels Spannschrauben auf die oben beschriebene Weise abdichtend verspannt werden. Die Dichtmittel sind hierbei im Inneren des Futterrohres angeordnet und dichten sowohl die Innenwand des Futterrohres als auch die durchgeführte Leitung ab. Auch bei dieser bekannten Durchführungsvorrichtung können nur kleine axiale Kräfte von der Versorgungsleitung über die Dichtmittel auf das Futterrohr übertragen werden, da sich ansonsten der Dichtkörper von der Futterrohrinnenwand lösen würde. Allerdings ist - ebenso wie bei der Durchführungsvorrichtung des deutschen Patents 38 28 693 - keine Sicherung vorgesehen, um eine Beschädigung oder ein Abreißen der durchgeführten Leitung im Inneren des Gebäudes bei zu großem axialen Zug zu verhindern.

Eine Lösung für dieses Problem ist in der europäischen Patentanmeldung 0 566 973 vorgeschlagen, bei der ein kurzes Rohrstück fest mit einer an einer Gebäudeinnenseite anlegbaren Flanschplatte verschweißt ist. An beiden Seiten des Rohrstucks sind Gasrohre anschließbar. Wirken übermäßige axiale Zugkräfte von der Außenseite auf das Gasrohr, wird das außen an das Rohrstück angeschlossene Rohr beschädigt oder bricht, bevor das Rohrstuck sich von der Flanschplatte oder die Flanschplatte von der Wand lösen kann.

Aufgabe der Erfindung ist es, eine Durchführungsvorrichtung der eingangs genannten Art anzugeben, mit der mindestens eine Versorgungsleitung in einfacher und sicherer Weise durch einen Durchbruch geführt werden kann. Insbesondere soll die Montage der Durchführungsvorrichtung schnell und einfach durchzuführen sein und soll ein Abreißen der Versorgungsleitung, speziell im Falle eines Gasrohres, wirkungsvoll verhindert werden. Sollte bei sehr großen, von außen wirkenden Kräften beispielsweise ein Gasrohr undicht werden, so soll dies außerhalb des Gebäudes geschehen und kein Gas in das Gebäude eindringen.

Die vorstehende Aufgabe wird gemäß dem ersten Aspekt der Erfindung mit den Merkmalen des Anspruchs 1 gelöst durch ein axial von den Dichtmitteln beabstandetes Stützelement zum Stützen der mindestens einen Leitung.

Die Aufgabe wird ferner bei einer Durchführungsvorrichtung der eingangs genannten Art - gemäß Anspruch 16 - dadurch gelöst, daß die erste Flanschplatte oder die zweite Flanschplatte an dem Futterrohr gelagert ist.

Weiterhin löst die Erfindung - gemäß Anspruch 26 - die Aufgabe dadurch, daß im montierten Zustand die Längsachse der Durchführungsvorrichtung zumindest abschnittsweise gekrümmt oder schrägwinkelig zu einer Achse verläuft, welche ihrerseits senkrecht durch die den Durchbruch aufweisenden Wand oder Sohlplatte verläuft. In den Unteransprüchen sind vorteilhafte Ausgestaltungen des Erfindungsgedankens wiedergegeben.

Erfindungsgemäß wird insbesondere durch eine Kombination der Merkmale der verschiedenen Aspekte der Erfindung eine Durchführungsvorrichtung zur Verfügung gestellt, die bei geringem Material- und Montageaufwand eine integrierte Lösung für eine ausreißsichere, gasdichte und wasserdichte Durchführung, insbesondere durch Sohlplatten für z.B. nicht unterkellerte Gebäude, realisiert.

Mittels des Stützelements gemäß dem ersten Aspekt der Erfindung wird die durch den Durchbruch durchgeführte Versorgungsleitung einerseits an den Dichtmitteln und andererseits - im axialen Abstand zu den Dichtmitteln - an dem Stützelement gestützt. Wirkt eine Zug- oder Querkraft auf die Versorgungsleitung, wird diese Kraft teilweise auf die Dichtmittel und im wesentlichen auf das Stützelement übertragen. Speziell das erfindungsgemäße Stützelement dient zur Aufnahme größerer von der Durchführungsvorrichtung aufzunehmender Kräfte; es kann somit konstruktiv speziell an diese Funktion angepaßt werden. Aufgrund der Kraftaufnahme durch das angepaßte Stützelement würde eine Versorgungsleitung erst bei sehr großen Kräften und Belastungen bleibend verformt werden oder sogar undicht werden. Das Stützelement schützt ferner vor einer Beschädigung von mit der Leitung verbundenen Armaturen, die durch Verformungen der Leitung aufgrund von großen Kräften beschädigt werden könnten. Insbesondere verhindert das Stützelement ein Anwinkeln oder Abwinkeln der durchzuführenden Leitung.

Das Stützelement ist vorteilhafterweise in einem stirnseitigen Bereich der Durchführungsvorrichtung angeordnet, während die Dichtmittel in dem gegenüberliegenden stirnseitigen Endbereich montiert werden. Diese räumliche Trennung von Dichtmitteln und Stützelement führt zu einer weitgehenden Entlastung der Dichtmittel, beispielsweise wenn das Stützelement nahe der Wandaußenseite angeordnet und Kräfte oder (Biege-) Momente von außen auf die Versorgungsleitung wirken. In diesem Fall leitet im wesentlichen das Stützelement die radialen und axialen Kraftkomponenten in den Durchbruch ab. Das Stützelement verhindert eine radiale Bewegung eines zum Gebäudeinneren hin verlaufenden Leitungsabschnitts hinter dem Stützelement und eine Kippbewegung der Leitung. Auf diese Weise kann beispielsweise verhindert werden, daß eine Gasleitung bei von außen wirkender Kraft im Bereich der Dichtmittel oder im Inneren des Gebäudes beschädigt wird oder bricht; sie würde allenfalls gebäudeaußenseitig vor dem Stützelement beschädigt werden. Kräfte werden nicht mittels der Leitung in das Innere des Gebäudes übertragen.

Bei einer bevorzugten Ausführungsform umfaßt die Durchführungsvorrichtung ein Futterrohr, welches im montierten Zustand der Durchführungsvorrichtung die Innenfläche des Durchbruchs zumindest teilweise auskleidet und an dem das Stützelement an dessen Innenfläche befestigt ist. Mittels eines durchgehenden Futterrohres kann bei gleichzeitig kompakter Bauweise der Durchführungsvorrichtung eine optisch ansprechende, "saubere" Auskleidung des Durchbruchs erreicht sowie die Anzahl der einzelnen in den Durchbruch einzusetzenden Teile reduziert werden. Das Stützelement ragt hierbei bevorzugt vom Futterrohr radial nach innen, und die Versorgungsleitung wird an dem freien Ende des Stützelements in radialem Abstand von der Innenfläche des Futterrohres abgestützt. Zur dauerhaften Verbindung des Stützelements ist es vorteilhaft, das Stützelement an der Innenfläche des Futterrohres - je nach Material des Stützelements sowie des Futterrohres - mittels Verschweißung, Verklebung oder dgl. dauerhaft anzubringen.

Eine besonders bevorzugte Ausführungsform sieht vor, daß die erfindungsgemäße Durchführungsvorrichtung mindestens ein Leerrohr zur Aufnahme und Hindurchführung der mindestens einen Leitung umfaßt, das im montierten Zustand zwischen der Innenfläche des Durchbruchs oder eines die Innenfläche des Durchbruchs zumindest teilweise auskleidenden Futterrohres und der Leitung angeordnet ist. Bevorzugt durchsetzt das Leerrohr die Dichtmittel sowie die Spannmittel, wobei sich die Dichtmittel im montierten Zustand abdichtend an das Leerrohr anlegen. Hierdurch können beispielsweise auch kleinere Leitungen, die an ihrem Außenumfang nicht in einfacher Weise von den Dichtmitteln abgedichtet werden können, durch einen Durchbruch hindurchgeführt werden. Auch lassen sich mehrere Versorgungsleitungen, beispielsweise Kommunikationskabel und/oder Energiekabel, innerhalb eines einzelnen Leerrohres anordnen, um auf diese Weise die Anzahl der abzudichtenden Oberflächen zu verringern. Weiterhin reduzieren sich Produktions- und Lageraufwand für die Dichtmittel, da nur eine relativ geringe Zahl verschiedener, auf die Durchmesser der Leerrohre abgestimmter Dichtmittel hergestellt bzw. gelagert werden muß.

Vorzugsweise ist das Stützelement im wesentlichen plattenförmig ausgebildet und weist einen geschlossenen oder offenen Ringabschnitt zur Aufnahme der Leitung oder des Leerrohres auf, da dies eine konstruktiv einfache und stabile Lösung darstellt.

Gemäß einer weiteren bevorzugten Ausführungsform ist das Stützelement im montierten Zustand mit der Leitung in Klemmeingriff und/oder ist mit der Leitung oder dem Leerrohr fest verbunden, so daß auf die Leitung oder das Leerrohr wirkende Kräfte von dem Stützelement aufgenommen werden. Zur schnellen und gegebenenfalls auch lösbaren Verbindung der Leitung sorgt der Klemmeingriff mit dem Stützelement. Die Leitung ist hierzu in das beispielsweise als Ring mit einem offenen Umfangsabschnitt ausgebildete Stützelement seitlich einrastbar, mit dem es dann kraft - oder auch reibschlüssig verbunden ist. Besonders bei relativ starren, beispielsweise metallischen Leitungen ist es vorteilhaft, wenn das ebenfalls starr ausgebildete Stützelement mit der Leitung oder dem Leerrohr verschweißt oder verklebt wird. Ein Abreißen des Stützelementes von der Futterrohrwand kann hiermit verhindert und von außen auf die Leitung wirkende (Zug-) Kräfte können übertragen werden.

Gemäß einer alternativen bevorzugten Ausführungsform umfassen die Dichtmittel mindestens eine Flanschplatte und mindestens ein mit Hilfe der Spannmittel elastisch verformbares Dichtelement.

Bei einer weiteren alternativen Ausführungsform ist das Stützelement im montierten Zustand in der Sohlplatte oder Wand verankert und ragt mit seinem die Leitung stützenden Abschnitt in den Durchbruch hinein. Bei dieser Ausführungsform wird das Stützelement während des Erstellens der Sohlplatte oder Wand in seiner Endposition fixiert.

Die Leitung oder das Leerrohr sind einfach und dauerhaft in der Durchführungsvorrichtung befestigbar, wenn die Leitung oder das Leerrohr umfangseitig mit einer sich in Radialrichtung erstreckenden Ankerscheibe verbunden, beispielsweise verschweißt ist. Die Ankerscheibe ist ihrerseits bevorzugt an den Dichtmitteln befestigbar, die vorzugsweise zwei Flanschplatten umfassen, zwischen denen ein Dichtkörper sandwichartig angeordnet ist. Bevorzugt ist bei dieser Ausführungsform die Ankerscheibe durch Schraubverbindung an einer der beiden Flanschplatten befestigbar.

Zwischen der Ankerscheibe und der Flanschplatte ist vorteilhafterweise ein Dichtungselement angeordnet, das bevorzugt ringförmig ausgebildet ist. Die Verwendung eines Dichtungselements ist insbesondere dann zweckmäßig, wenn das Leerrohr beispielsweise nur bis an den Dichtkörper reicht und von diesem abgedichtet wird, aber axial nicht über die Flanschplatte hinausragt, an welcher die Ankerscheibe befestigt werden soll. In diesem Fall könnte eine Zugbelastung das Leerrohr vom Dichtkörper trennen und beispielsweise Gas - ohne die Anwesenheit eines Dichtungselementes - zwischen der Flanschplatte und der Ankerscheibe ins Gebäudeinnere gelangen.

Zwischen dem Leerrohr und der durch das Leerrohr hindurchgeführten Leitung ist vorteilhafterweise mindestens ein Dichtungsring angeordnet, der bei Undichtigkeit einer beispielsweisen gasführenden Leitung in dem Leerrohr in einem Abschnitt außerhalb des Gebäudes ein Eindringen von Gas zwischen Leitung und Leerrohr verhindert.

Wird ein Leerrohr verwendet, greift ein das in axialem Abstand zu den Dichtmitteln angeordnetes Stützelement zur Stützung einer im Leerrohr geführten Versorgungsleitung bevorzugt am Außenumfang des Leerrohres an. Die Verteilung der axialen und radialen Zugkräfte sowie die Art des Wirkeingriffes des Stützelements mit dem Leerrohr entspricht der für die Versorgungsleitung beschriebenen.

Gemäß dem zweiten Aspekt der Erfindung ist eine der beiden Flanschplatten an dem Futterrohr gelagert. Vorteilhaft ist dies die dem Äußern des Gebäudes zugewandte Flanschplatte, die verhindert, daß der Dichtkörper sich bei zu hoher Beanspruchung, etwa übermäßigem axialem Zug von außen von der Futterrohrinnenwand löst. Stattdessen wird der Dichtkörper in einem solchen Falle in Axialrichtung gegen die kraftschlüssig mit dem Futterrohr verbundene Flanschplatte gezogen. Die Dichtigkeit des Dichtkörpers wird hierbei nicht beeinträchtigt. Der Dichtkörper, der an seinem Umfang lediglich reibschlüssig mit der Innenwand des Futterrohres sowie den Leitungen bzw. den Leerrohren Kontakt hat, verbleibt demnach auch bei hohen Zugbeanspruchungen an der Innenwand des Futterrohres und läßt bei einem Gasrohrbruch außerhalb des Gebäudes kein Gas ins Gebäudeinnere. Zur dauerhaften Verbindung der betreffenden Flanschplatte ist diese mit dem Futterrohr fest verbunden, vorteilhafterweise verschweißt oder verklebt. ALternativ kann an dem Futterrohr ein Lagerring befestigt sein, an dem eine der beiden Flanschplatten anliegt und im Falle des Auftretens axialer Kräfte abgestützt wird.

Um die Bruchsicherheit der Leitung bzw. eines die Leitung umgebenden Leerrohres bei axialer Krafteinwirkung zu erhöhen, sind Leitung bzw. Leerohr fest mit der an dem Futterrohr befestigten Flanschplatte verbunden, vorzugsweise verschweißt oder verklebt. Hierdurch wird die Gefahr des Brechens der Leitung bzw. des Leerrohres an den Dichtmitteln oder des Herausrutschens aus den Dichtmitteln wesentlich reduziert. Zusätzlich kann zur weiteren Stabilitätserhöhung eine wie oben beschriebene Ankerscheibe verwendet werden, die einerseits mit einer Leitung oder einem Leerrohr fest verbunden und andererseits mit einer Flanschplatte verschraubt ist.

Um die Durchführungsvorrichtung besonders sicher in der den Durchbruch aufweisenden Wand zu stabilisieren, sind an der Außenfläche des Futterrohres Verankerungsmittel zur formschlüssigen Verankerung der Durchführungsvorrichtung in der Wand angeordnet. Die Verankerungsmittel sind vorzugsweise als von dem Futterrohr abstehender Außenflansch ausgebildet, so daß die Durchführungsvorrichtung gegen wirkungsvoll gesichert ist. Zur beständigen Befestigung ist der Außenflansch vorzugsweise mit dem Futterrohr verschweißt oder verklebt.

Vorteilhafterweise verläuft der Außenflansch im montierten Zustand der Durchführungsvorrichtung im wesentlichen parallel zu einem den Durchbruch umgebenden äußeren Wandabschnitt. Hierdurch sind Durchführungsvorrichtungen auch in relativ dünnen Wänden mittels eines weit in die Wand ragenden Außenflansches verankerbar.

Falls die Durchführungsvorrichtung kein Futterrohr aufweist, können die Verankerungsmittel im montierten Zustand der Durchführungsvorrichtung alternativ direkt an den Dichtmitteln und/oder an der mindestens einen Leitung oder einem die Leitung umgebenden Leerrohr angreifen.

Die gekrümmt oder schräg durch eine Sohlplatte oder Wand verlaufende Durchführungsvorrichtung gemäß dem dritten Aspekt der Erfindung ermöglicht es beispielsweise, Versorgungsleitungen bzw. Leerrohre relativ flach durch eine waagerechte Sohlplatte zu verlegen, d.h. ohne daß die Leitungen im Falle einer Sohlplatte gebäudeaußenseitig tief in den Boden ragen würden. Somit kann bei dem Leitungsstück in dem Sohlplattendurchbruch sowie dem hieran anschließenden Verbindungsstück, welches meist parallel und unterhalb der Sohlplatte verläuft und zu einer Hauptleitung führt, auf eng gekrümmte Leitungsabschnitte verzichtet werden. Rechtwinkelige und daher leicht brechende Leitungsabschnitte, die senkrecht durch Sohlplattendurchbrüche geführte Leitungen mit parallel zur Sohlplatte verlegten Leitungsabschnitten verbinden, werden vermieden. Hebt ein Bagger bei Tiefbauarbeiten irrtümlicherweise die in der Nähe des Hauses verlegten Versorgungsleitungen an, werden die an den gekrümmt oder schräg durch die Sohlplatte geführten Leitungsabschnitten angreifenden Kräfte in Axial- und Radialkomponenten aufgeteilt. Die Kraftkomponenten (insbesondere die Radialkomponente) werden bei zusätzlicher Verwendung eines wie oben beschriebenen Stützelementes im wesentlichen von dem fest in den Dichtmitteln eingespannten Leitungsabschnitt ferngehalten, so daß dort keine Beschädigungen an der Leitung und mit diesen verbundenen Armaturen auftreten.

Der Winkel der Längsachse der Durchführungsvorrichtung zu der senkrecht zur Wand verlaufenden Achse beträgt vorteilhafterweise etwa 30° bis 60°, vorzugsweise 45°. Bei diesen Winkeln ist die Durchführungsvorrichtung aufgrund einer günstigen Kraftkomponentenaufteilung besonders fest in der Wand verankert, so daß sie eine hohe Ausreißsicherheit aufweist. Bei anderen Winkeln würde sich die von einem Futterrohr auszukleidende Durchbruchfläche erhöhen und könnte gegebenenfalls zu Undichtigkeiten zwischen der Außenwand des Futterrohres und der Innenwand des Durchbruchs führen.

Es hat sich zum Zwecke einer flexiblen Handhabung als vorteilhaft erwiesen, wenn die beiden Flanschplatten mehrere, miteinander fluchtende Durchbrechungen aufweisen, durch welche jedoch nicht zwangsläufig jeweils eine Leitung oder ein Leerrohr hindurchgeführt werden muß. Vielmehr wird die Anzahl der Durchbrechungen im Dichtkörper auf die Anzahl der durch die Durchführungsvorrichtung hindurchzuführenden Leitungen und Leerrohre abgestimmt.

Bei einer besonders einfach zu montierenden Durchführungsvorrichtung ist die durchzuführende Leitung ein relativ kurzes, lediglich den Durchbruch durchsetzendes Leitungsstück, an dessen freie Enden einerseits ein zum Gebäude hinführende und andererseits eine im Gebäude verlegte Leitung anschließbar sind. Hierbei ist das den Durchbruch durchsetzende Leitungsstück zumindest fest mit einer Flanschplatte verbunden. Zur Montage ist die Durchführungsvorrichtung in dem Durchbruch zu plazieren bzw. vor Erstellen der Wand in der vorgesehenen Endposition zu fixieren. Nach Fertigstellung der Wand lassen sich dann die beiden Leitungen anschließen.

Weitere vorteilhafte Ausgestaltungen sowie Ausführungsbeispiele der Erfindung werden nachstehend anhand der beiliegenden Zeichnungen näher erläutert. Es zeigen:
- Fig. 1: einen Längsschnitt einer schräg durch eine waagerechte Sohlplatte verlaufenden Durchführungsvorrichtung gemäß eines ersten Ausführungsbeispiels;
- Fig. 2: eine Draufsicht auf die Durchführungsvorrichtung der Fig. 1;
- Fig. 3: einen Längsschnitt einer senkrecht durch eine waagerechte Sohlplatte verlaufenden Durchführungsvorrichtung gemäß eines zweiten Ausführungsbeispiels;
- Fig. 4: eine Draufsicht auf die Durchführungsvorrichtung der Fig. 3;
- Fig. 5: einen Längsschnitt einer schräg durch eine waagerechte Sohlplatte verlaufenden Durchführungsvorrichtung gemäß eines dritten Ausführungsbeispiels;
- Fig. 6: eine Draufsicht auf die Durchführungsvorrichtung der Fig. 5;
- Fig. 7: einen Längsschnitt einer senkrecht durch eine waagerechte Sohlplatte verlaufenden Durchführungsvorrichtung gemäß eines vierten Ausführungsbeispiels;
- Fig. 8: eine Draufsicht auf die Durchführungsvorrichtung der Fig. 7;

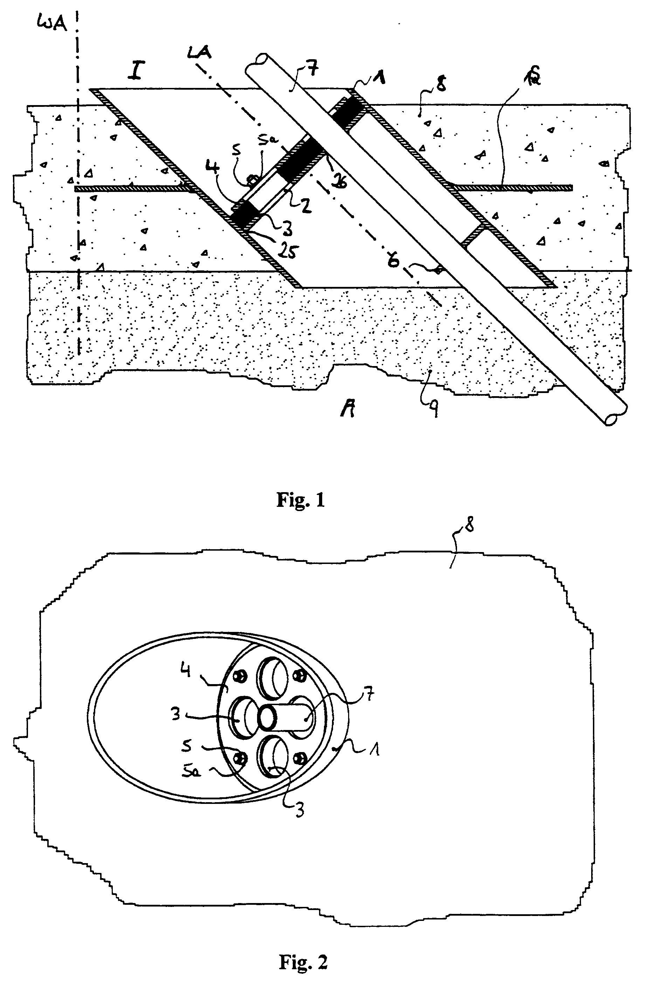

In den Fig. 1 und 2 ist ein erstes Ausführungsbeispiel einer Durchführungsvorrichtung 20 für mehrere Leitungen 7 (es ist nur eine abgebildet) dargestellt, die in einem im Querschnitt runden Durchbruch einer waagerechten Sohlplatte 8 eines nicht unterkellerten Gebäudes plaziert ist. Bezogen auf die Fig. 1 schließt sich oberhalb der Sohlplatte 8 das Innere I eines Gebäudes an, während unterhalb der Sohlplatte 8 eine Sandschicht 9 im Gebäudeaußenraum A angeordnet ist. Die Längsachse LA der montierten Durchführungsvorrichtung 20 bildet mit einer senkrecht durch die Sohlplatte 8 verlaufenden Achse WA einen Winkel von etwa 45°.

Die Durchführungsvorrichtung 20 umfaßt - wie unten näher erläutert ist - ein Futterrohr 1, durch das die Leitungen 7 hindurchgeführt sind. In dem Futterrohr 1 sind in dessen dem Gebäudeinneren I nahen, stirnseitigen Bereich verspannbare Dichtmittel 2, 3, 4 zur Abdichtung des Bereichs zwischen dem Futterrohr 1 und den Leitungen 7, und im gegenüberliegenden stirnseitigen Bereich ein Stützelement 6 zur Stützung der Leitung 7 angeordnet.

Das im Querschnitt kreisförmige Futterrohr 1 ist beispielweise aus einem metallischen Material, Kunststoff oder Faserzement hergestellt und kleidet die Innenwand den Durchbruchs vollständig und abdichtend aus. Die Schnittkanten der beiden stirnseitigen Enden des Futterrohres 1 verlaufen jeweils parallel zur Sohlplatte 8 und ragen in vertikaler Richtung ein vorgebenes Maß in das Gebäudeinnere I bzw. die Sandschicht 9 hinein.

Die Dichtmittel 2, 3, 4 umfassen eine erste und eine zweite, jeweils kreisförmige Flanschplatte 2, 4 aus vorzugsweise Stahl sowie einen zwischen den beiden Flanschplatten 2, 4 sandwichartig angeordneten, zylinderförmigen Dichtkörper 3 aus einem elastisch verformbaren Werkstoff. Hierbei ist, bezogen auf die Fig. 1, die erste Flanschplatte 2 unterhalb und die zweite Flanschplatte 4 oberhalb des Dichtkörpers 3 angeordnet. Der Dichtkörper 3 (im unverspannten Zustand) sowie die erste Flanschplatte 2 weisen einen nur geringfügig kleineren Durchmesser als der Innendurchmesser des Futterrohres 1 auf. Die zweite Flanschplatte 4, die zum Gebäudeinneren I gerichtet ist, besitzt diesen gegenüber einen kleineren Durchmesser.

Die Dichtmittel 2, 3, 4 sind derart in dem Futterrohr 1 angeordnet, daß ihre Längsachsen mit der Längsachse LA des Futterrohres 1 zusammenfallen und daß der - in bezug auf die Fig. 1 - höchstgelegende Umfangsabschnitt sich ungefähr auf Höhe der Oberseite der Sohlplatte 8 befindet. Aufgrund des schräg in der Sohlplatte angeordneten Futterrohres 1 sind die beiden Flanschplatten 2, 4 und der Dichtkörper 3 in Radialrichtung um einen Winkel von ungefähr 45° gegenüber der Vertikalen geneigt.

Die Flanschplatten 2, 4 sowie der Dichtkörper 3 weisen jeweils vier, miteinander fluchtende Durchbrechungen auf, welche in gleichem radialen Abstand um die Längsachse LA angeordnet sind. Die durch die Durchbrechungen hindurchführbaren Leitungen 7 sind beispielsweise Rohre und/oder Kabel. Selbstverständlich kann eine andere Anzahl von durchzuführenden Leitungen und Durchbrechungen vorgesehen sein.

Um den Dichtkörper 3 in Abdichtposition zu fixieren, weisen die Flanschplatten 2, 4 und der Dichtkörper 3 jeweils vier, miteinander fluchtende Durchgangsbohrungen auf, durch die Stiftschrauben 5 durchführbar sind. In dem in den Fig. 1 und 2 dargestellten Ausführungsbeispiel ist durch jede Durchgangsbohrung von der ersten Flanschplatte 2 her eine Stiftschraube 5 eingeführt, die den Dichtkörper 3 und die zweite Flanschplatte 4 durchsetzen. Auf das aus der zweiten Flanschplatte 4 überragende Ende istjeweils eine Sechskantmutter 5a aufgeschraubt. Bei Anziehen der Sechskantmuttern 5a wird der Dichtkörper 3 zwischen der ersten und zweiten Flanschplatte 2, 4 axial verpreßt, wodurch sich der Dichtkörper 3 radial aufweitet und sich abdichtend einerseits gegen die Innenwand des Futterrohres 1 und andererseits gegen die Leitungen 7 anlegt.

Die erste Flanschplatte 2 liegt umfangseitig an der Innenwand des Futterrohres 1 an und ist mit dieser umlaufend auf der dem Gebäudeaußenraum A zugewandten Seite an Schweißstellen 25 verschweißt. In alternativer, nicht dargestellter Weise kann an dem Futterrohr 1 ein Lagerring befestigt, etwa verklebt sein, an dem eine der beiden Flanschplatten 2, 4 anliegt und im Falle des Auftretens axialer Kräfte abgestützt wird; vorzugsweise liegt die erste Flanschplatte 2 an dem Lagerring an, der in diesem Fall zwischen dem Stützelement 6 und der Flanschplatte 2 angeordnet ist und umfangsseitig an dem Futterrohr 1 befestigt ist. Beim Anziehen der Sechskantmuttern 5a bewegt sich demnach die zweite Flanschplatte 4 in Richtung der fest im Futterrohr 1 angeordneten ersten Flanschplatte 2 und verpreßt den Dichtkörper 3 in Axialrichtung.

Die Leitung 7 ist in dem Ausführungsbeispiel der Fig. 1 und 2 aus einem metallischen Werkstück hergestellt und durch eine Durchbrechung in den beiden Flanschplatten 2, 4 sowie im Dichtkörper 3 hindurchgeführt. Die Leitung 7 ist in ihrem Umfangsbereich umlaufend mit der ersten Flanschplatte 2 an Stellen 26 verschweißt, welche sich - ebenso wie die Schweißstellen 25 - auf der dem Dichtkörper 3 abgewandten Seite befinden und die Axial- und Radialverformung des Dichtkörpers 3 nicht beeinträchtigen.

Im axialen Abstand zu den Dichtmittel 2, 3, 4 zum Gebäudeaußenraum A hin ist das Stützelement 6 aus vorzugsweise Metall mit der Innenwand des Futterrohres 1 verschweißt. Das plattenförmige Stützelement 6 besitzt einen länglichen, radial ins Innere des Futterrohres weisenden Abschnitt, dessen eines Ende fest mit dem Futterrohr 1 verbunden ist und an dessen anderem Ende ein geschlossener Ringabschnitt anschließt. Der Ringabschnitt ragt soweit ins Futterrohrinnere, daß er ungefähr auf Höhe des Übergangs Sohlplatte 8 - Sandschicht 9 angeordnet ist. Die Leitung 7 ist durch den Ringabschnitt des Stützelementes 6 hindurchgeführt und im Umfangsbereich mit dem Ringabschnitt verschweißt. Die Längsachse der Leitung 7 verläuft hierbei parallel zur Längsachse des Futterrohres 1.

Im Außenbereich A geht die Leitung 7 - sich an den durch die Durchführungsvorrichtung geführten Leitungsabschnitt anschließend - in einem Bogen mit großem Radius in einen üblicherweise parallel und in geringem Abstand zur Sohlplatte 8 in der Sandschicht 9 verlaufenden äußeren Leitungsabschnitt über (nicht dargestellt). Bei Anheben dieses äußeren Leitungsabschnitts oder Ziehen an demselben werden die dabei auf die Leitung aufgebrachten Kräfte von dem Stützelement 6 aufgenommen.

Aus der Fig. 1 ist ferner ersichtlich, daß an der Außenseite des Futterrohres 1 sich parallel zur Sohlplatte 8 erstreckende, metallische Verankerungsmittel 1a angeschweißt sind. Die Verankerungsmittel 1a sind als um das Futterrohr 1 umlaufender kreisscheibenförmiger Außenflansch 1a ausgebildet, der mittig in der Sohlplatte 8 verankert ist. Die Durchführungsvorrichtung 20 wird bei diesem Ausführungsbeispiel vor Gießen der Sohlplatte 8 aus Beton in Position gebracht, so daß der Beton den Außenflansch 1a sowie das Futterrohr 1 formschlüssig einschließt und stabilisiert. Der Außenflansch 1a übernimmt außerdem die Funktion einer zusätzlichen Sperre für an der Außenwand des Futterrohres 1 aufsteigende Feuchtigkeit. Alternativ zu dem Futterrohr kann der Durchbruch mit einer Beschichtung ausgekleidet werden, beispielsweise mit einem Speziallack.

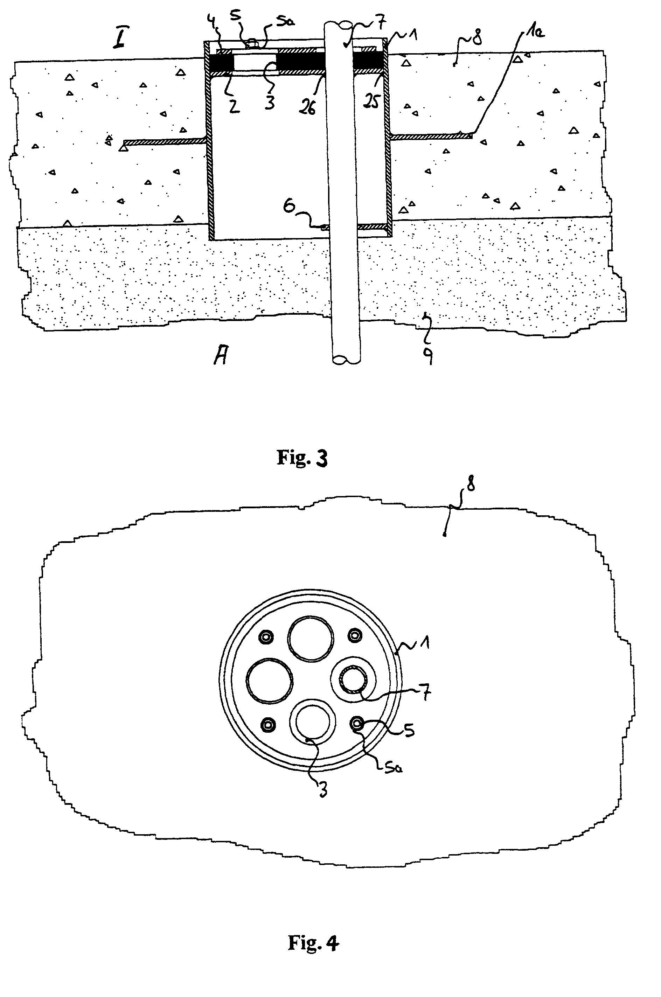

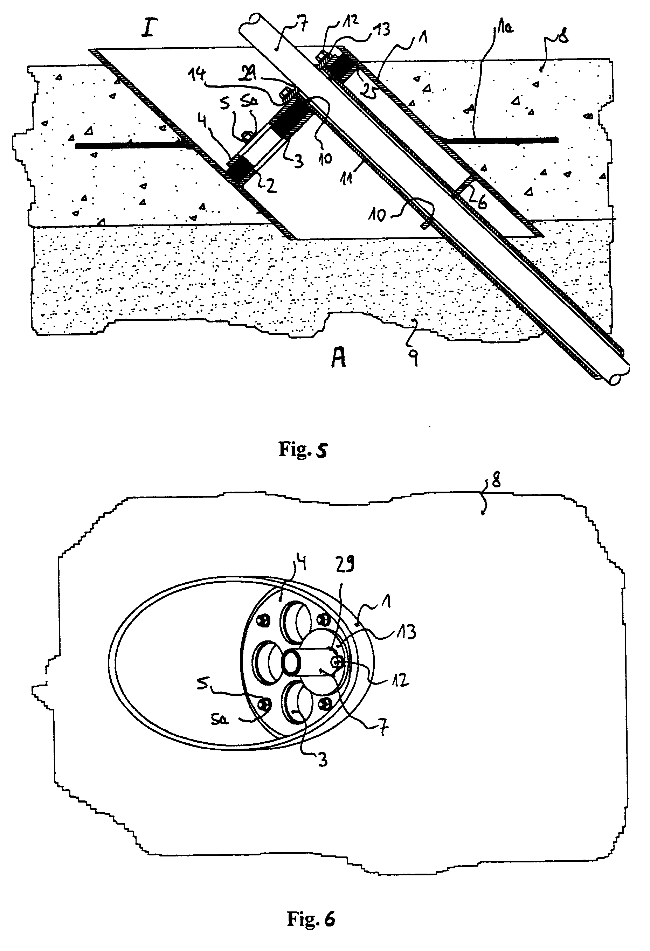

Das in den Fig. 3 und 4 gezeigte zweite Ausführungsbeispiel unterscheidet sich vom ersten Ausführungsbeispiel im wesentlichen in der Ausrichtung der Durchführungsvorrichtung 20 in der waagerechten Sohlplatte 8. Statt einer schrägen Anordnung verläuft die Durchführungsvorrichtung 20 des zweiten Ausführungsbeispiels senkrecht durch die Sohlplatte 8. Dies bedeutet, daß auch die Leitung 7 vertikal durch den Wanddurchbuch geführt ist. Die Dichtmittel 2, 3, 4 befinden sich hierbei im - auf die Fig. 3 bezogen - oberen stirnseitigen Bereich der Durchführungsvorrichtung 20, während das Stützelement 6 in deren unterem stirnseitigen Bereich angeordnet ist.

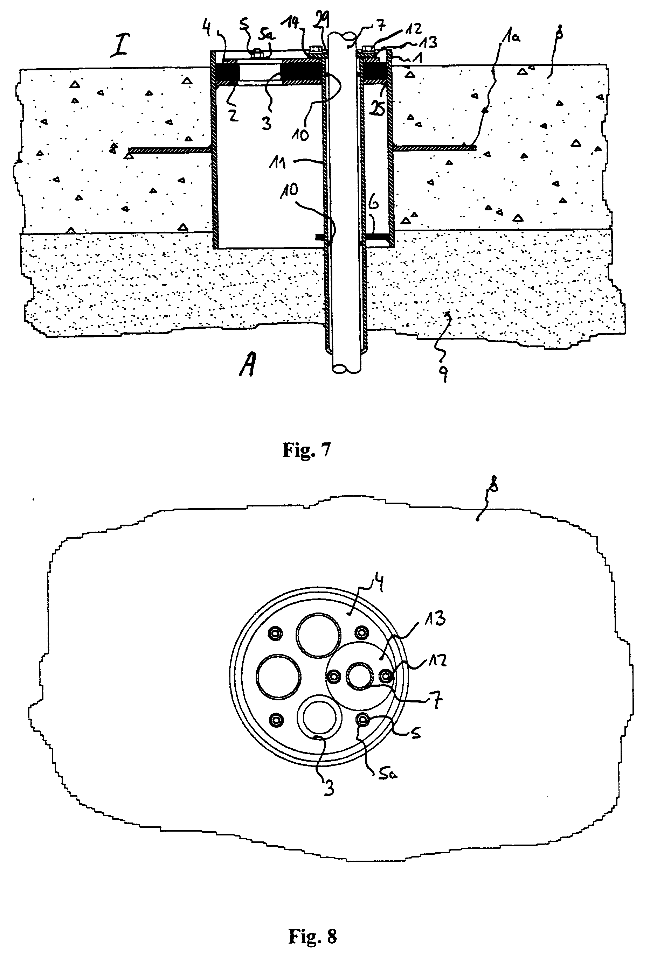

Die beiden in den Figuren 5 - 8 dargestellten Ausführungsbeispiele, die eine schräge (Fig. 5, 6) sowie eine senkrechte (Fig. 7, 8) durch eine Sohlplatte 8 verlaufende Durchführungsvorrichtung 20 zeigen, unterscheiden sich von den zuvor beschriebenen Ausführungsbeispielen im wesentlichen durch die zusätzliche Verwendung von mindestens einem Leerrohr 11 (nur eines ist dargestellt), in welchem mindestens eine Leitung 7 geführt ist. Die im Querschnitt kreisförmigen Leerrohre 11 aus Metall oder Kunststoff weisen einen geringeren Durchmesser als das Futterrohr 1 auf, so daß mehrere Leerrohre 11 problemlos nebeneinander in Längsrichtung in der Durchführungsvorrichtung 20 und durch verschiedene Durchbrechungen in den Dichtmitteln 2, 3, 4 geführt werden können.

Wie den Fig. 5 und 7 entnehmbar ist, ist das Leerrohr 11 durch ein Stützelement 6 geführt, welches an ungefähr der gleichen Position wie das Stützelement 6 des Ausführungsbeispiels der Fig. 1 angeordnet ist und das Leerrohr 11 zur Stützung der Leitung 7 hält. Zwischen Leerrohr 11 und der Leitung 7 ist auf Hohe des Stützelementes 6 ein Dichtring 10 angeordnet, der im wesentlichen bei einer gebäudeaußenseitigem Leckage einergasführenden Leitung 7 ein Hindurchströmen des Gases zwischen Leerrohr 11 und Leitung 7 verhindert.

Die Oberkante des Leerrohres 11 schließt mit der zweiten Flanschplatte 4 nach oben hin ab. In dem sich nach unten anschließenden Leerrohrabschnitt befindet sich auf Höhe des Dichtkörpers 3 ein weiterer Dichtring 10 zwischen dem Leerohr 11 und der Leitung 7.

Auf die metallische Leitung 7 ist eine Ankerscheibe 13 aus Metall geschoben, deren Innendurchmesser geringfügig größer als der Außendurchmesser der Leitung 7 ist. Die Ankerscheibe 13 ist im Bereich ihres Innenumfangs umlaufend mit der Leitung 7 an Stellen 29 verschweißt und auf die zweite Flanschplatte 4 zentrisch zur Durchbrechung für das Leerrohr 11 bzw. die Leitung 7 aufgesetzt und mittels Befestigungsschrauben 12 von der Gebäudeinnenseite I aus festgeschraubt. Zwischen der Ankerscheibe 13 und der zweiten Flanschplatte 4 kann ein Dichtungselement 14 angeordnet sein, das im Falle des Ausreißens des Leerrohres 11 aus dem Dichtkörper 3 ein Eindringen von Gas zwischen Ankerscheibe 13 und zweiter Flanschplatte 4 verhindert. Bei Verspannen der Stiftschrauben 5 mittels der Sechskantmuttern 5a, die gemeinsam Spannmittel bilden, verschiebt sich die zweite Flanschplatte 4 mitsamt der auf ihr aufgeschraubten Ankerscheibe 13 und dem an dieser verschweißten Leitung 7. Das Leerrohr 11, welches weder mit der zweiten Flanschplatte 4 noch der Ankerscheibe 13 kraftschlüssig verbunden ist, verbleibt im wesentlichen in seiner axialen Postition und wird von dem Dichtkörper 3 abgedichtet. Das Leerrohr 11 kann auch mit der Flanschplatte 2 verschweißt sein.

In allen beschriebenen Ausführungsbeispielen kann es vorgesehen sein, daß die den Durchbruch durchsetzende Leitung 7 von einem relativ kurzen Gasrohrstück 7 gebildet ist, welches an seinen beiden Enden Anschlußmöglichkeiten für außerhalb und innerhalb des Gebäudes verlegte Leitungen aufweist. Vorzugsweise ist ein Kraftbegrenzer in einer von außen zur Durchführungsvorrichtung 20 gelegten stählernen Gasleitung eingebaut, der verhindert, daß bei übermäßiger Zugbelastung - beispielsweise bei Erfassen der Gasleitung durch einen Bagger - die Gasleitung im Gebäudeinneren abreißt. Es wird ein Übergangsstück an das vom Gebäude nach außen mündende stählerne Gasrohrstück angesetzt, welches mit einer im Außenraum verlegten Kunststoffleitung verbunden wird. Die Kunststoffleitung bricht bei dieser Anordnung eher als die metallische Gasleitung, so daß kein Gas ins Gebäudeinnere eindringen kann.

Der gekrümmte oder schräge Verlauf der Durchführungsvorrichtung 20 durch die Sohlplatte 8 reduziert gleichfalls die Gefahr eines Abreißens bei relativ großen Zugkräften. Wirken von außen auf das meist parallel zur Sohlplatte 8 verlegte Zuleitungsrohr derartige Zugkräfte, wirken diese Kräfte mit einer axialen und einer radialen Komponente. Während die Axialkomponente aufgrund der vorstehend beschriebenen konstruktiven Merkmale zu keiner Beschädigung der Gasleitung innerhalb des Gebäudes führt, verursacht die Radialkomponente eine Angularbewegung, die jedoch aufgrund des Stützelementes 6 die Gasleitung nicht beschädigt, etwa an den Dichtelementen 2, 3, 4 bzw. innerhalb des Gebäudes brechen läßt.

Es hat sich als zweckmäßig erwiesen, die komplette Durchführungsvorrichtung 20 mitsamt dem an der ersten Flanschplatte 2 angeschweißten Gasrohrstück 7 und/oder den Leerrohren 11 vor dem Erstellen der Sohlplatte 8 oder einer sonstigen zu durchsetzenden Wand einzubringen. Die Durchführungsvorrichtung kommt dementsprechend mit einer sehr geringen Bauteilanzahl aus und ist einfach sowie schnell einzubauen, gewährleistet aber dennoch eine hohe Ausreißsicherheit sowie Dichtigkeit gegenüber Gas und Feuchtigkeit.

Zur Montage der in den Fig. 5 bis 8 dargestellten Dichtungsvorrichtungen wird zunächst das Futterrohr 1 in der Sohlplatte 8 eingegossen zusammen mit dem Leerrohr 11. Anschließend wird der Dichtkörper 3, die Flanschplatte 4 und die Sechskantmuttern 5a auf den Stiftschrauben 5 montiert. Das Gasrohrstück 7, welches im Bereich der Schweißnaht 29 mit der Ankerscheibe 13 verschweißt ist, wird in das Leerrohr 11 eingeführt, bis die Ankerscheibe 13 zur Anlage an der Flanschplatte 4 kommt. Dann wird die Ankerscheibe 13 mittels Befestigungsschrauben 12 mit der Flanschplatte 4 lösbar verbunden, wobei zwischen der Ankerscheibe 13 und der Flanschplatte 4 ein Dichtungselement 14 angeordnet ist. Im montierten Zustand ragt das Gasrohrstück 7 durch das Stützelement 6 hindurch.

Das Gasrohrstück 7 ist im Außenbereich A in nicht dargestellter Weise mittels eines Übergangsstücks mit einer Kunststoffleitung verbunden, so daß im Bereich des Übergangsstücks eine Sollbruchstelle gebildet ist, die bei Überschreiten einer bestimmten (Zug-) Kraft auf das Kraftrohrstück 7 für ein definiertes Brechen der Gasleitung im Außenbereich A sorgt. In diesem Fall möglicherweise aus der Gasleitung ausströmendes Gas wird von der Dichtungsvorrichtung 20 daran gehindert, auf die Gebäudeinnenseite I zu strömen. Hierfür sorgen der Dichtring 10 zwischen Leerrohr 11 und Gasrohrstück 7, der Dichtring 10 im Bereich des Dichtkörpers 3, das Dichtelement 14 sowie die durch die Schweißnaht 29 gebildete Schweißverbindung. Die Dichtringe 10 sind für eine Verhinderung des Einströmens von Gas in das Innere des Gebäudes nicht unbedingt erforderlich.

In bevorzugter Weise weisen die Leerrohre 11 eine solche Länge auf, daß sie nur gerade aus dem Gebäude herausragen. Die herausragenden Enden können mit Hilfe von Überschiebmuffen mit sogenannten Energiekanälen verbunden werden, die regelmäßig mehrere Leerrohre für Versorgungsleitungen umfassen. Die Verbindung ist derart, daß keine axialen Kräfte auf die aus dem Gebäude herausragenden Leerrohre übertragen werden.

Die erfindungsgemäße Durchführungsvorrichtung 20 erlaubt es, mehrere Versorgungsleitungen verschiedener Art durch sie hindurchzuführen. Hierbei kann ein Stützelement 6 für das Gasrohrstück 7 vorgesehen sein, während die anderen Versorgungsleitungen gegebenenfalls keine entsprechenden Stützelemente 6 benötigen, da sie eventuell aus biegsamerern Materialien hergestellt sein können und ein Abreißen bei Zugbelastung weniger wahrscheinlich ist. Das Stützelement kann aber auch so ausgebildet sein, daß es alle durchzuführenden Leitungen auf die zuvor beschriebene Weise abstützt.

Es ist anzumerken, daß die erfindungsgemäße Durchführungsvorrichtung 20 nicht nur - wie in den Ausführungsbeispielen dargestellt - in waagerecht verlaufenden Wänden bzw. Sohlplatten 8 einsetzbar ist, sondern in Wänden jeglicher Ausrichtung und Form. Desweiteren sind anstatt der metallischen Werkstoffe für das Futterrohr 1, das Stützelement 6 und die Leerohre 11 Kunststoffe verwendbar, die durch Verklebung oder auch Verschweißung miteinander verbindbar sind.

## Patentansprüche

1. Durchführungsvorrichtung zur Durchführung mindestens einer Leitung (7) durch einen in einer Wand, einer Sohlplatte (8) o. dgl. ausgebildeten Durchbruch, mit zwischen der Innenfläche des Durchbruchs und der Außenfläche der Leitung (7) plazierbaren Dichtmitteln (2, 3, 4) zum Abdichten an dem Durchbruch und der Leitung (7) und mit Spannmitteln (5, 5a) zum abdichtenden Verspannen der Dichtmittel (2, 3, 4), mit einem Futterrohr (1), welches im montierten Zustand der Durchführungsvorrichtung (20) die Innenfläche des Durchbruchs zumindest teilweise auskleidet,
wobei die Dichtmittel (2, 3, 4) eine erste und eine zweite Flanschplatte (2, 4) sowie einen zwischen den beiden Flanschplatten (2, 4) angeordneten Dichtkörper (3) aufweisen und die beiden Flanschplatten (2, 4) und der Dichtkörper (3) miteinander fluchtende Durchbrechungen zur Durchführung der mindestens einen Leitung (7) aufweisen, mit einem axial von den Dichtmitteln (2, 3, 4) beabstandeten Stützelement (6) zum Stützen der mindestens einen Leitung (7), dadurch gekennzeichnet, daß das Stützelement (6) an der Innenfläche des Futterrohres (1) befestigt ist und daß die erste Flanschplatte (2) oder die zweite Flanschplatte (4) an dem Futterrohr (1) befestigt ist.

2. Durchführungsvorrichtung nach Anspruch 1,
dadurch gekennzeichnet, daß die Dichtmittel (2, 3, 4) in einem stirnseitigen Endbereich und das Stützelement (6) im gegenüberliegenden stirnseitigen Endbereich der Durchführungsvorrichtung (20) angeordnet sind.

3. Durchführungsvorrichtung nach Anspruch 2,
dadurch gekennzeichnet, daß das Stützelement (6) an der Innenfläche des Futterrohres (1) verschweißt oder verklebt ist.

4. Durchführungsvorrichtung nach einem der vorhergehenden Ansprüche,
gekennzeichnet durch mindestens ein Leerrohr (11) zur Aufnahme der mindestens einen Leitung (7), das im montierten Zustand zwischen der Innenfläche des Durchbruchs oder eines die Innenfläche des Durchbruchs zumindest teilweise auskleidenden Futterrohres (1) und der Leitung (7) angeordnet ist.

5. Durchführungsvorrichtung nach einem der vorhergehenden Ansprüche,
dadurch gekennzeichnet, daß das Stützelement (6) im wesentlichen plattenförmig ausgebildet ist und einen geschlossenen oder offenen Ringabschnitt zur Aufnahme der Leitung (7) oder des Leerrohres (11) aufweist.

6. Durchführungsvorrichtung nach einem der vorhergehenden Ansprüche,
dadurch gekennzeichnet, daß das Stützelement (6) im montierten Zustand mit der Leitung (7) oder dem Leerrohr (11) in Klemmeingriff ist und/oder mit der Leitung (7) oder dem Leerrohr (11) fest verbunden ist, so daß auf die Leitung (7) oder das Leerrohr (11) wirkende Kräfte von dem Stützelement (6) aufgenommen werden.

7. Durchführungsvorrichtung nach Anspruch 5,
dadurch gekennzeichnet, daß das Stützelement (6) mit der Leitung (7) oder dem Leerrohr (11) verschweißt oder verklebt ist.

8. Durchführungsvorrichtung nach einem der vorhergehenden Ansprüche,
dadurch gekennzeichnet, daß die Dichtmittel (2, 3, 4) mindestens eine Flanschplatte (2, 4) und mindestens ein mit Hilfe der Spannmittel (5, 5a) elastisch verformbares Dichtelement (3) umfassen.

9. Durchführungsvorrichtung nach einem der vorhergehenden Ansprüche,
dadurch gekennzeichnet, daß das Stützelement (6) im montierten Zustand in der Wand verankert ist und in den Durchbruch hineinragt.

10. Durchführungsvorrichtung nach Anspruch 9,
dadurch gekennzeichnet, daß das Leerrohr (11) die Dichtmittel (2, 3, 4) durchsetzt und sich die Dichtmittel (2, 3, 4) im montierten Zustand abdichtend an das Leerrohr (11) anlegen.

11. Durchführungsvorrichtung nach einem der vorhergehenden Ansprüche,
dadurch gekennzeichnet, daß die Leitung (7) und/oder das Leerrohr (11) fest mit einer Ankerscheibe (13) verbunden ist, welche ihrerseits an den Dichtmitteln (2, 3, 4) befestigbar ist.

12. Durchführungsvorrichtung nach Anspruch 11,
wobei die Dichtmittel (2, 3, 4) mindestens eine Flanschplatte (2, 4) umfassen, dadurch gekennzeichnet, daß die Ankerscheibe (13) mittels Schraubverbindung an der Flanschplatte (2, 4) befestigbar ist.

13. Durchführungsvorrichtung nach Anspruch 12,
dadurch gekennzeichnet, daß ein Dichtungselement (14) zwischen der Ankerscheibe (13) und der Flanschplatte (2, 4) angeordnet ist.

14. Durchführungsvorrichtung nach einem der Ansprüche 9 bis 13,
gekennzeichnet durch mindestens einen Dichtungsring (10) zwischen dem Leerrohr (11) und der durch das Leerrohr (11) hindurchgeführten Leitung (7).

15. Durchführungsvorrichtung nach Anspruch 1,
dadurch gekennzeichnet, daß die erste oder die zweite Flanschplatte (2, 4) mit dem Futterrohr (1) verschweißt oder verklebt ist.

16. Durchführungsvorrichtung nach Anspruch 15,
dadurch gekennzeichnet, daß die mindestens eine durchzuführende Leitung (7) oder ein die Leitung (7) umgebendes Leerrohr (11) fest mit der mit dem Futterrohr (1) fest verbundenen Flanschplatte (2, 4) verbunden ist.

17. Durchführungsvorrichtung nach Anspruch 16,
dadurch gekennzeichnet, daß die Leitung (7) oder das Leerrohr (11) mit der Flanschplatte (2, 4) verschweißt oder verklebt ist.

18. Durchführungsvorrichtung nach einem der vorhergehenden Ansprüche,
gekennzeichnet durch Verankerungsmittel (1a) zur formschlüssigen Verankerung der Durchführungsvorrichtung (20) in der den Durchbruch aufweisenden Wand.

19. Durchführungsvorrichtung nach Anspruch 18,
dadurch gekennzeichnet, daß die Verankerungsmittel (1a) als an dem Futterrohr (1) befestigter Außenflansch (1a) ausgebildet sind.

20. Durchführungsvorrichtung nach Anspruch 19,
dadurch gekennzeichnet, daß der Außenflansch (1a) vollständig um das Futterrohr (1) umläuft und mit diesem verschweißt oder verklebt ist.

21. Durchführungsvorrichtung, insbesondere nach dem Oberbegriff des Anspruchs 1 und/oder nach einem der vorstehenden Ansprüche,
dadurch gekennzeichnet, daß im montierten Zustand die Längsachse der Durchführungsvorrichtung (20) zumindest abschnittsweise gekrümmt oder schrägwinkelig zu einer Achse (WA) verläuft, welche ihrerseits senkrecht durch die den Durchbruch aufweisenden Wand verläuft.

22. Durchführungsvorrichtung nach Anspruch 21,
dadurch gekennzeichnet, daß der Winkel der Längsachse der Durchführungsvorrichtung (20) zu der senkrecht zur Wand verlaufenden Achse (WA) etwa 30° bis 60°, vorzugsweise 45°, beträgt.

23. Verwendung einer Durchführungsvorrichtung für mindestens eine Leitung, insbesondere einer Durchführungsvorrichtung (20) nach einem der vorhergehenden Ansprüche, zur Montage in einem zumindest abschnittsweise gekrümmt oder schräg in einer Wand angeordneten Durchbruch.

24. Durchführungsvorrichtung nach einem der vorstehenden Ansprüche,
dadurch gekennzeichnet, daß die beiden Flanschplatten (2, 4) mindestens soviele miteinander fluchtende Durchbrechungen wie der Dichtkörper (3) aufweist, und daß der Dichtkörper (3) soviele, mit Durchbrechungen in den Flanschplatten (2, 4) fluchtende Durchbrechungen wie hindurchgeführte Leitungen (7) bzw. Leerrohre (11) aufweist.
